# EUROPEAN PATENT APPLICATION

(11) **EP 4 789 548 A1**
(43) Date of publication of application: **12.08.2026**
(21) Application number: 24874404.7
(22) Date of filing: 29.08.2024
(51) Int. Cl.: A23L 7/109

(54) **NOODLE STRIP CONTAINING PROTEIN**

(30) Priority: 02.10.2023 JP 2023171694
(71) Applicant: NISSIN FOODS HOLDINGS CO., LTD., Yodogawa-ku Osaka-shi, Osaka 532-8524 (JP)
(72) Inventor: TSUKITANI, Ami, Osaka-shi Osaka 532-8524 (JP); MURATA, Yasuoki, Osaka-shi Osaka 532-8524 (JP); SUIDO, Yohei, Osaka-shi Osaka 532-8524 (JP); MATSUMOTO, Ryota, Osaka-shi Osaka 532-8524 (JP); MIURA, Shun, Osaka-shi Osaka 532-8524 (JP); SANADA, Kohei, Osaka-shi Osaka 532-8524 (JP)
(74) Representative: Mewburn Ellis LLP
(86) International application number: PCT/JP2024/030905
(87) International publication number: WO 2025/074790

(57) **Abstract**

[Problem]

It is an object to provide a noodle belt having good noodle-making properties even when a large amount of protein is included.

[Solution]

It is possible to provide a noodle belt that can be made into a noodle, even when a large amount of protein is included, by using a gluten composition and a protein ingredient other than gluten in combination as a protein ingredient and making the noodle belt so as to have an extensibility measured by an extensograph of 21 mm or more. The tensile strength measured by an extensograph of the noodle belt is preferably 800 BU or more, and the weight ratio of the gluten composition to the protein ingredient other than gluten in the protein ingredient is preferably 3:7 to 8:2. The balance between extension and stiffness of the noodle belt is improved by using the gluten composition and the protein ingredient other than gluten in combination as the main raw material powder of the noodle belt, and noodle making is possible.

## Description

### TECHNICAL FIELD

The present invention relates to a noodle belt containing protein.

### BACKGROUND ART

In recent years, with an increase in health consciousness as a background, foods that allow higher protein intake are attracting attention. Also in noodles, products that are rich in protein are expected, but since noodles of which the main raw material is wheat flour necessarily include a large amount of carbohydrate, it is usually not possible to include a large amount of protein.

Accordingly, examples of the method for increasing the content of protein in noodles include a method of adding animal protein or plant protein. As a noodle containing protein, Patent Literature 1 discloses a noodle at least containing wheat flour, an animal protein component, and gelatinized wheat flour, wherein the gelatinized wheat flour is included in an amount of 2 to 10 wt%. In addition, Patent Literature 2 discloses a noodle that is obtained by noodle making from a raw material mixture containing 10 to 40 wt% of dietary fibers and 15 to 50 wt% of protein. However, a problem of deterioration in the noodle-making properties and texture remains only by merely increasing the addition amount of protein, and noodles containing protein produced by such conventional technology have room for improving the noodle-making properties and texture.

### CITATION LIST

### PATENT LITERATURE

Patent Literature 1
   Japanese Patent Laid-Open No. 2021-7355
Patent Literature 2
   Japanese Patent Laid-Open No. 2019-50769

### SUMMARY OF INVENTION

### TECHNICAL PROBLEM

It is an object of the present invention to provide a noodle belt that can be made into noodles even when it contains a large amount of protein.

### SOLUTION TO PROBLEM

The inventors have diligently studied on improvement of noodle-making properties of noodles that are rich in protein and, as a result, have newly found that a noodle belt that can be made into noodles while containing a large amount of protein can be obtained by using a gluten composition and a protein ingredient other than gluten in combination as a protein ingredient and making the extensibility measured by an extensograph of the noodle belt 21 mm or more, and the present invention has been accomplished.

That is, the present invention relates to a noodle belt that comprises a gluten composition and a protein ingredient other than gluten as a main raw material powder, wherein the total content of the gluten composition and the protein ingredient other than gluten included in the main raw material powder is 20% or more, and the extensibility measured by an extensograph is 21 mm or more.

In addition, the noodle belt according to the present invention preferably has a tensile strength measured by an extensograph of 800 BU or more.

The weight ratio of the gluten composition to the protein ingredient other than gluten in the noodle belt according to the present invention is preferably 3:7 to 8:2.

The gluten composition in the noodle belt according to the present invention preferably includes a gluten powder of which the mixing resistance measured by a farinograph reaches the maximum after the start of mixing and then decreases over time and a gluten powder of which the mixing resistance reaches the maximum and then does not decrease over time, and the amount of the gluten powder of which the mixing resistance measured by a farinograph reaches the maximum after the start of mixing and then decreases over time is preferably 70 wt% or less of the gluten composition.

The protein ingredient other than gluten according to the present invention is preferably at least one of soybean protein, rice protein, and pea protein.

In addition, it is preferable to include a protein degradation product as the protein ingredient other than gluten according to the present invention.

Noodle strings are also supplied using the noodle belt according to the present invention.

Examples of the method for producing the noodle according to the present invention include a method for producing a noodle including a step of producing a noodle dough from a main raw material powder that includes a gluten composition and a protein ingredient other than gluten, wherein the total content of the gluten composition and the protein ingredient other than gluten is 20 wt% or more, a step of producing a noodle belt having an extensibility measured by an extensograph of 21 mm or more from the noodle dough, and a step of producing noodle strings from the noodle belt.

### ADVANTAGEOUS EFFECTS OF INVENTION

According to the present invention, it is possible to provide a noodle belt that can be made into a noodle even when it contains a large amount of protein. In addition, it is possible to provide a method for producing noodle strings and a noodle using the noodle belt.

### BRIEF DESCRIPTION OF DRAWINGS

[Figure 1] Figure 1 is a graph showing dough properties of gluten 1 measured using a farinograph.
[Figure 2] Figure 2 is a graph showing dough properties of gluten 2 measured using a farinograph.
[Figure 3] Figure 3 is a photograph of a noodle belt sample placed on an extensograph.
[Figure 4] Figure 4 is a photograph of a noodle belt sample measured with an extensograph.

### DESCRIPTION OF EMBODIMENTS

The content of the present invention will now be described in detail with reference to Examples, but the present invention is not limited to these Examples. The type of the noodle produced in the present invention may be any noodle known in the art, and examples thereof include wheat noodles, buckwheat noodles, Chinese noodles, pasta, macaroni, and a noodle skin.

### (1) Main raw material powder formulation

As the main raw material powder according to the present invention, a gluten composition and a protein ingredient other gluten are essential, but in addition to them, cereal flours, such as wheat flour, buckwheat flour, barley flour, rye flour, and rice flour, and various types of starches, such as potato starch, tapioca starch, and corn starch, may be used alone or as a mixture. As the starch, raw starch, gelatinized starch, modified starch such as acetylated starch, etherified starch, and crosslinked starch, and resistant starch as the dietary fibers can be used.

### Gluten composition

The gluten composition according to the present invention is not particularly limited, and one type of gluten powder may be used alone, or a mixture of multiple types of gluten powders may be used. The origin and the production method of gluten are also not particularly limited, but a gluten powder derived from wheat (including durum wheat flour) is preferable.

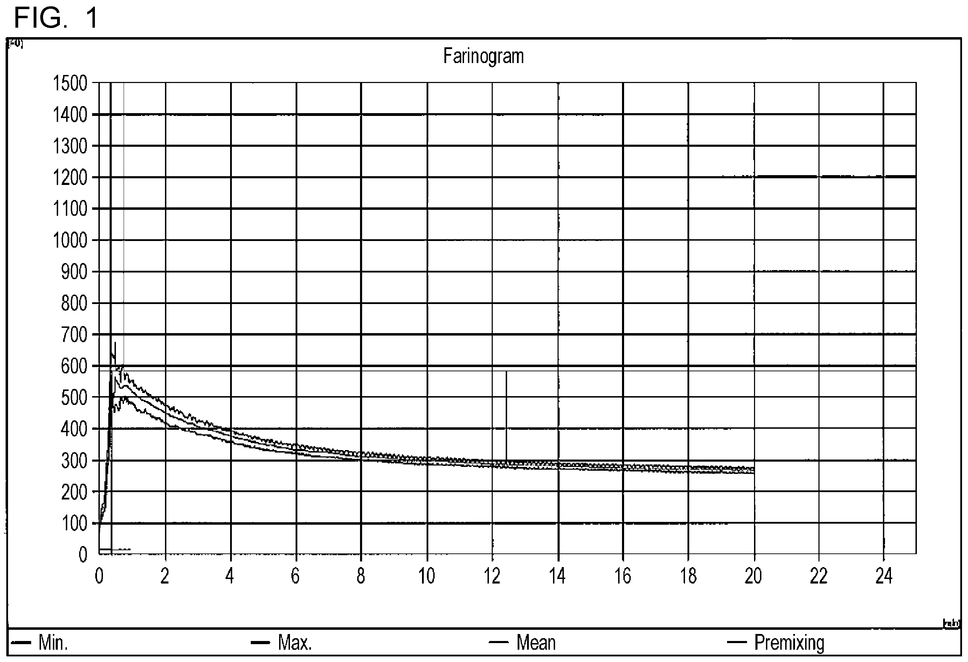

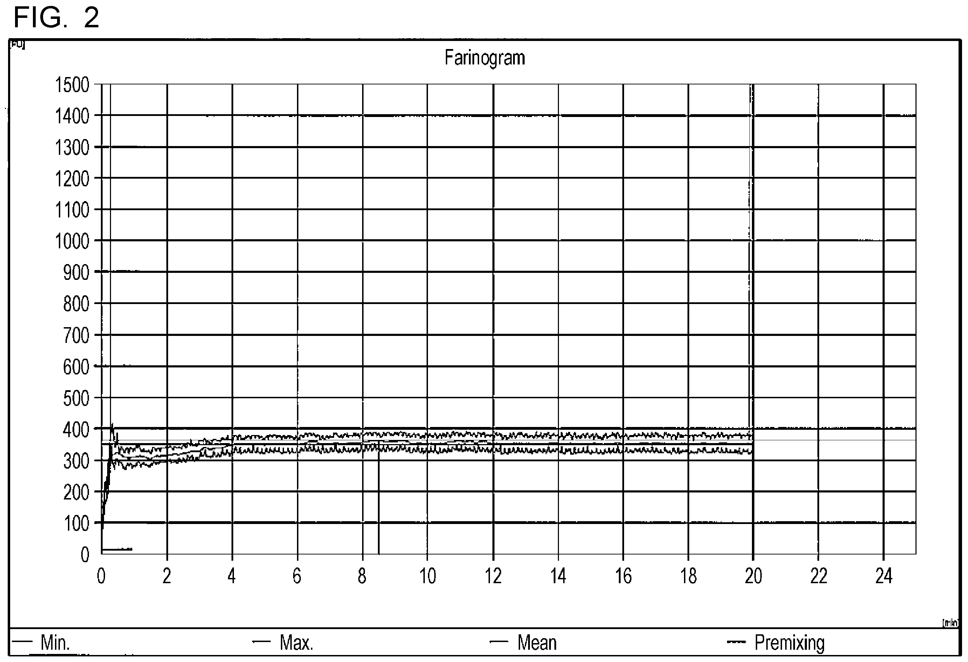

The gluten composition preferably includes a gluten powder of which the mixing resistance measured by a farinograph reaches the maximum after the start of mixing and then decreases over time (hereinafter, mentioned as "gluten powder of farinograph 1") and a gluten powder of which the mixing resistance reaches the maximum and then does not decrease over time (hereinafter, mentioned as "gluten powder of farinograph 2"). The mixing resistance of the gluten powder of farinograph 1 is shown in Figure 1, and the mixing resistance of the gluten powder of farinograph 2 is shown in Figure 2.

The addition amount of the gluten powder of farinograph 1 in the gluten composition is preferably 70 wt% or less and more preferably 50 wt% or less. The extensibility and tensile strength of the noodle belt can be adjusted by adjusting this proportion.

### (Measurement by farinograph)

The physical properties of the gluten were evaluated using a farinograph (manufactured by Brabender Technologie GmbH & Co. KG). The farinograph is a device for measuring the torque applied to the rotating shaft as a consistency (FU: farinograph unit) during the mixing process of a noodle dough, and the specific measurement conditions in the present invention are as follows.

A gluten powder (60 g) and an acetylated starch (Sakura II, manufactured by Matsutani Chemical Industry Co., Ltd., 240 g) were mixed, water (195 mL) was then added thereto, and the mixture was mixed for 20 minutes, followed by measurement. Other conditions were a temperature of 30°C and a mixing rate of 45 rpm.

### Protein ingredient other than gluten

If the gluten composition only is blended in a large amount as the protein ingredient, the noodle belt stiffens to deteriorate the noodle-making properties. Accordingly, in the noodle belt according to the present invention, a protein ingredient other than gluten is blended. Examples of the protein ingredient other than gluten include soybean protein, rice protein, milk protein, egg white, pea protein, maize protein, potato protein, collagen, and various protein degradation products and partial degradation products, and they can be used alone or as a mixture. Among them, soybean protein, rice protein, pea protein, and protein hydrolysates are preferably used, and a combination of one or more of soybean protein, rice protein, and pea protein and a protein hydrolysate is more preferably used.

As the addition amount, the weight ratio of the gluten composition to the protein ingredient other than gluten is preferably 3:7 to 8:2 and more preferably 4:6 to 8:2. If the ratio of the protein ingredient other than gluten is low, the noodle belt stiffens, and if the ratio is high, the cohesiveness of the noodle belt tends to become poor. When a protein degradation product or partial degradation product is used, the amount thereof in the protein ingredient other than gluten is preferably 17 to 83 wt%, more preferably 17 to 67 wt%, and most preferably 25 to 50 wt%.

Since the protein content of a noodle containing 100 wt% of an ordinary wheat flour is about 10 wt%, in order to obtain a high-protein noodle, it is preferable that the main raw material powder contains 20 wt% or more of protein. In the present application, a content of 20 wt% or more can be certainly achieved by including the gluten composition and the protein ingredient other than gluten in an amount of 20 wt% or more. In order to achieve high-protein amount and good texture, the main raw material powder preferably contains the gluten composition and the protein ingredient other than gluten in an amount of 23 to 40 wt%. In order to increase the protein content more, the gluten composition and the protein ingredient other than gluten can be included in an amount of 50 to 100 wt% in the main raw material powder, and also considering the texture and noodle-making properties, preferably included in an amount of 50 to 80 wt%, more preferably 60 to 80 wt%, in the main raw material powder.

### Sub material formulation

As sub materials according to the present invention, kansui, salt, a phosphate other than kansui, a thickener, a noodle quality modifier, a pH adjuster, a coloring matter, edible fat or oil, a flavoring agent, a preservative, and so on, which are generally used in ordinary noodle making methods, may be added to the noodles. These sub materials may be added in a powder form together with the main raw material powder or may be added by being dissolved or suspended in kneading water.

### (2) Kneading step

The noodle dough according to the present invention may be produced according to an ordinary method. Specifically, a main raw material powder including a gluten composition and a protein ingredient other than gluten is subjected to powder mixing, kneading water prepared by dissolving a sub material, such as water, salt, or kansui, are then added thereto, and the mixture is thoroughly mixed using a mixer such that the raw materials are uniformly mixed to produce a noodle dough. The mixer that is used for kneading is not particularly limited, and a batch mixer, a flow jet mixer, a vacuum mixer, or the like can be appropriately used.

It is preferable that the time for kneading is appropriately adjusted such that the dough does not bunch up. For example, when mixing is performed with a batch mixer, the time is preferably 5 to 15 minutes and more preferably 6 to 10 minutes.

Also when the amount of kneading water added is large, the dough easily bunches up early, and the subsequent production and rolling out of a noodle belt are difficult. Accordingly, the amount of kneading water to be added based on the main raw material powder is preferably 30 to 60 wt% and more preferably 40 to 50 wt%.

### (3) Noodle belt producing step

Then, a noodle belt is produced from the produced dough. The production may be performed according to an ordinary method, and examples of the method include a method in which a dough is formed into a crude noodle belt by rolling and then into a noodle belt by, for example, compounding and a method in which a noodle belt is formed using an extruder. When a noodle belt is produced by extrusion using an extruder or the like, the production is preferably carried out under reduced pressure. A noodle belt having a multilayer structure may be produced by combining a plurality of noodle belts, and when a multilayer structure is produced by combining a plurality of noodle belts, a surface with soft and smooth texture is easily obtained by decreasing the blending amounts of the gluten composition and the protein ingredient other than gluten in the outer layer and increasing the blending amounts of the gluten composition and the protein ingredient other than gluten in the inner layer.

In the present invention, the extensibility measured by an extensograph of the noodle belt is adjusted to 21 mm or more. The extensibility is more preferably 25 mm or more and most preferably 34 mm or more and 65 mm or less. When the extensibility measured by an extensograph is less than 21 mm, the noodle belt is not extended, the cohesiveness is weak, and the noodle-making properties are poor. The extensibility of the noodle belt may be adjusted by the gluten composition, the protein ingredient other than gluten, of the added water, and so on.

The tensile strength measured by an extensograph of the noodle belt according to the present invention is not particularly limited but is preferably 800 BU or more and more preferably 800 to 1600 BU. When the tensile strength measured by an extensograph is less than 800 BU, the noodle belt becomes soft and difficult to roll out, and when the tensile strength is more than 1600 BU, the noodle belt becomes stiff and brittle and difficult to roll out. The tensile strength of the noodle belt may be adjusted by the gluten composition, the protein ingredient other than gluten, the added water, and so on.

### (Measurement of extensibility and tensile strength of noodle belt)

The extensibility and tensile strength measured by an extensograph of a noodle belt are measured as follows.

Kneading water is added to a raw material powder, and the mixture is stirred to produce a dough. The dough is allowed to pass through between 180-mm diameter shaping rollers set to a clearance between the rollers of 8 mm at a rotation speed of 0.28 mm/min to produce a crude noodle belt. The crude noodle belt is then compounded under the same conditions to produce a noodle belt for measurement.

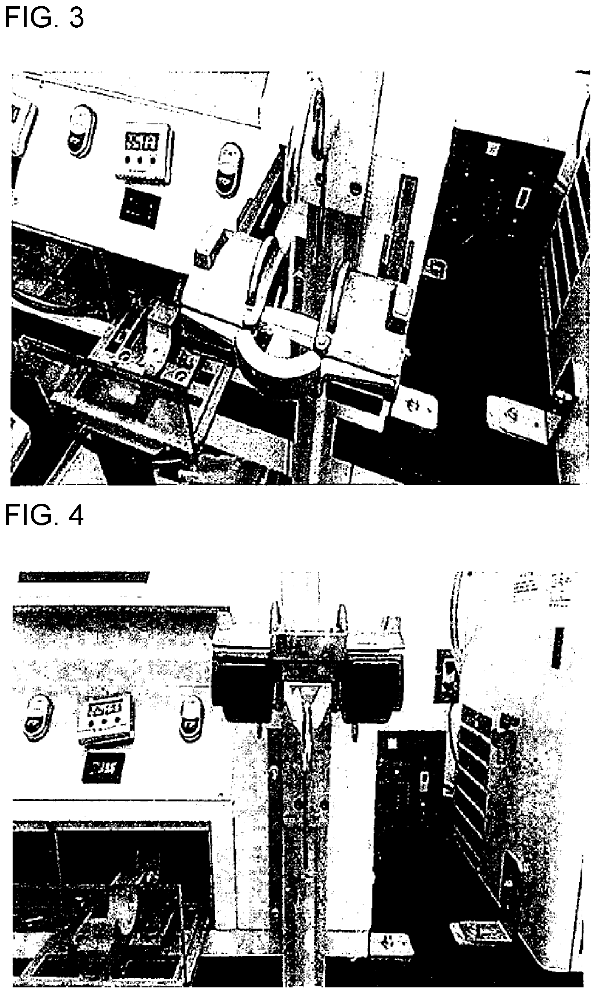

The produced noodle belt for measurement is cut near the center into a stick shape having a length of 150 mm in the stretching direction of the noodle belt and a length of 10 mm in the width direction of the noodle belt to obtain an analysis sample. The produced analysis sample is set in an extensograph such that the rolling surfaces, not the cutting surfaces, are on the top and bottom as shown in Figure 3 and is measured with an extensograph for EXTENSIBILITY (extensibility) and MAXIMUM (tensile strength). The measurement is performed three times, and the averages thereof are defined as values of the extensibility and tensile strength of the sample.

### (4) Noodle string producing step

When a noodle is then produced, noodle strings are produced from the produced noodle belt. The production may be performed according to an ordinary method, and examples of the method include a method of producing noodle strings by rolling out the noodle belt with a roller multiple times into a predetermined noodle belt thickness and then cutting the noodle belt with a cutting-out roller called a cutting blade or with a knife. Subsequently, the produced noodle strings are cut to a proper length to obtain raw noodle strings.

The raw noodle strings may be dusted with flour or the like and then wrapped to provide a raw noodle. Alternatively, the raw noodle strings may be steamed and/or boiled to obtain a steamed noodle or a boiled noodle. When a boiled noodle is subjected to pH adjustment, sealing, and sterilization, a chilled noodle or a fresh type instant noodle can be obtained. The raw noodle strings may be dried to obtain a dried noodle or a semi-dried noodle, or the raw noodle may be, for example, steamed and/or boiled and then frozen to obtain a frozen noodle.

An instant noodle can be produced by steaming and/or boiling raw noodle strings as needed and drying it. The drying method is not particularly limited, and a drying method that is generally used in production of instant noodles can be used. Specifically, examples of the drying method include, in addition to fry (fried) drying, non-fried drying such as hot-air drying, vacuum-freeze-drying, microwave drying, and air drying at low temperature, and also a combination thereof can be carried out. The fry drying treatment is carried out usually at 130 to 160°C for 1 to 3 minutes, and the hot-air drying treatment is usually carried out at 60 to 120°C for 15 to 180 minutes. The moisture content after drying treatment may be 1 to 5 wt% in the fry drying treatment and may be 2 to 12 mass% in the hot-air drying treatment.

### Examples

Examples of the present invention will be described below, but the present invention is not limited thereby.

### <Test 1: Investigation of blending amount of protein>

All raw materials of the formulation described in Table 1 below were mixed, then kneading water prepared by dissolving salt (20 g) and a kansui preparation (7 g) in water (500 mL) was added thereto, and the mixture was kneaded with a mixer for 15 minutes to produce a noodle dough (dough). The results of the test are also collectively shown in Table 1.

Each material is described below:
Gluten 1: gluten powder of farinograph 1 (Figure 1); and
Gluten 2: gluten powder of farinograph 2 (Figure 2).

The produced dough was allowed to pass through between 180-mm diameter shaping rollers set to a clearance between the rollers of 8 mm at a rotation speed of 0.28 mm/min to produce a crude noodle belt. The crude noodle belt was then compounded under the same conditions to produce a noodle belt for measurement, and EXTENSIBILITY (extensibility) and MAXIMUM (tensile strength) were measured with an extensograph by the above-described method.

The produced noodle dough was made into a noodle belt and rolled out, and the noodle-making properties were also evaluated. The evaluation was performed by the following 5 scores, and 3 or higher scores were defined as a pass.

### <Evaluation of noodle-making properties>

5: noodle-making properties are very good;
4: noodle-making properties are good;
3: noodle making is possible;
2: noodle belt can be produced, but rolling out is difficult; and
1: noodle belt cannot be produced.

**[Table 1]**

| | | Test Example 1-1 | Test Example 1-2 | Test Example 1-3 | Test Example 1-4 | Test Example 1-5 | Test Example 1-6 | Test Example 1-7 |
|---|---|---|---|---|---|---|---|---|
| Added protein content | | 35% | 35% | 35% | 35% | 60% | 80% | 80% |
| Formulation | Wheat flour | 650 | 650 | 650 | 650 | 400 | 200 | 200 |
| | Gluten 1 | 105 | - | 63 | - | 108 | 144 | - |
| | Gluten 2 | 245 | - | 147 | 210 | 252 | 336 | 480 |
| | Rice protein | - | 350 | 140 | 140 | 240 | 320 | 320 |
| Results | Extensibility | - | - | 45 | 55 | 45 | 49 | - |
| | Tensile strength | - | - | 880 | 1300 | 1335 | 1578 | - |
| | Noodle-making property | 2 | 1 | 5 | 5 | 5 | 4 | 1 |

As shown in Test Examples 1-1 and 1-2, if the gluten composition or the rice protein was used alone when protein was added in an amount of 35 wt% based on the main raw material powder, the noodle-making properties were poor. When only a gluten composition was used as in Test Example 1-1, the dough was very stiff and could be made into a noodle belt, but its rolling out was difficult. When only rice protein was used as in Test Example 1-2, the cohesiveness of the dough was weak, and a noodle belt could not be produced. In contrast, as shown in Test Examples 1-3 and 1-4, when a gluten composition and rice protein were used in combination, the noodle-making properties were good.

As shown in Test Examples 1-3 to 1-6, the dough tended to stiffen with an increase in the addition amount of the protein, but noodle making was possible. In Test Example 1-7, the dough was stiff, and a noodle belt could not be produced.

From the above, it was suggested that even when the addition amount of protein is large, the noodle-making properties are improved by using a gluten composition and a protein ingredient other than gluten in combination, and noodle making is possible.

### Test 2: Investigation of addition ratio of gluten composition to protein ingredient other than gluten>

Noodle belts were produced as in the method of Test 1 except that the raw material formulations shown in Table 2 below were used. The results of the test are also collectively shown in Table 2.

**[Table 2]**

| | | Test Example 2-1 | Test Example 2-2 | Test Example 1-3 | Test Example 2-3 | Test Example 2-4 | Test Example 2-5 |
|---|---|---|---|---|---|---|---|
| Ratio of gluten to protein other than gluten | | 3:7 | 4:6 | 6:4 | 7:3 | 8:2 | 9:1 |
| Formulation | Wheat flour | 650 | 650 | 650 | 650 | 650 | 650 |
| | Gluten 1 | 32 | 42 | 63 | 74 | 84 | 95 |
| | Gluten 2 | 73 | 98 | 147 | 171 | 196 | 220 |
| | Rice protein | 245 | 210 | 140 | 105 | 70 | 35 |
| Results | Extensibility | 21 | 34 | 45 | 52 | 63 | - |
| | Tensile strength | 811 | 850 | 880 | 1097 | 1300 | - |
| | Noodle-making property | 3 | 5 | 5 | 5 | 4 | 2 |

As shown in Test Example 2-5, when the ratio of the addition amount of the gluten composition was too large, the dough was stiff and could be made into a noodle belt, but its rolling out was difficult. In contrast, in Test Examples 2-1 to 2-4, the extensibility and tensile strength (stiffness) of the noodle belt tended to increase with an increase in the ratio of the addition amount of the gluten composition, and in every Test Example, noodle making was possible. In Test Example 2-1, noodle making was possible, but the noodle belt was slightly weak in cohesiveness and was soft.

From the above, it was suggested that the addition ratio of the gluten composition to the protein ingredient other than gluten is preferably 3:7 to 8:2.

### <Test 3: Investigation of gluten composition>

Noodle belts were produced as in the method of Test 1 except that the raw material formulations shown in Table 3 below were used. The results of the test are also collectively shown in Table 3.

**[Table 3]**

| | | Test Example 1-4 | Test Example 3-1 | Test Example 3-2 | Test Example 1-3 | Test Example 3-4 | Test Example 3-5 |
|---|---|---|---|---|---|---|---|
| Condition | Ratio of gluten of farinograph 1 | 0% | 10% | 20% | 30% | 50% | 70% |
| Formulation | Wheat flour | 650 | 650 | 650 | 650 | 650 | 650 |
| | Gluten 1 | 0 | 21 | 42 | 63 | 105 | 147 |
| | Gluten 2 | 210 | 189 | 168 | 147 | 105 | 63 |
| | Rice protein | 140 | 140 | 140 | 140 | 140 | 140 |
| Results | Extensibility | 55 | 50 | 49 | 45 | 45 | 38 |
| | Tensile strength | 1300 | 1158 | 842 | 880 | 871 | 629 |
| | Noodle-making property | 5 | 5 | 5 | 5 | 5 | 3 |

As shown in Table 3, the extensibility of a noodle belt tended to decrease with an increase in the ratio of the gluten powder of farinograph 1. In addition, as in Test Examples 1-4 and 3-1, when the ratio of the gluten of farinograph 1 was low, the tensile strength was high, and the noodle belt was stiff. As in Test Example 3-5, when the ratio of the gluten of farinograph 1 was low, the tensile strength was low, and the noodle belt was soft. These results suggested that the extensibility and tensile strength can be adjusted by bringing the addition ratio of the gluten powder of farinograph 1 in the gluten composition to 70 wt% or less and the noodle-making properties can be improved.

### <Test 4: Investigation of protein ingredient other than gluten>

Noodle belts were produced as in the method of Test 1 except that the raw material formulations shown in Table 4 below were used. The results of the test are also collectively shown in Table 4.

**[Table 4]**

| | | Test Example 4-1 | Test Example 4-2 | Test Example 4-3 |
|---|---|---|---|---|
| Formulation | Wheat flour | 600 | 600 | 600 |
| | Gluten 1 | 60 | 60 | 60 |
| | Gluten 2 | 140 | 140 | 140 |
| | Soybean protein | 200 | - | - |
| | Rice protein | - | 200 | - |
| | Pea protein | - | - | 200 |
| Results | Extensibility | 39 | 37 | 55 |
| | Tensile strength | 1255 | 861 | 994 |
| | Noodle-making property | 5 | 5 | 5 |

As shown in Table 4, the extensibility and stiffness vary depending on the type of the protein ingredient other than gluten, but in every protein ingredient, the noodle-making properties were equally good.

### <Test 5: Investigation of protein degradation product>

Noodle belts were produced as in the method of Test 1 except that the raw material formulations shown in Table 5 below were used. The results of the test are also collectively shown in Table 5.

**[Table 5]**

| | | Test Example 5-1 | Test Example 5-2 | Test Example 5-3 | Test Example 5-4 | Test Example 5-5 | Test Example 5-6 | Test Example 5-7 |
|---|---|---|---|---|---|---|---|---|
| Proportion of protein hydrolysate | | 0% | 17% | 25% | 33% | 50% | 67% | 83% |
| Formulation | Wheat flour | 200 | 200 | 200 | 200 | 200 | 200 | 200 |
| | Gluten 1 | 96 | 96 | 96 | 96 | 96 | 96 | 96 |
| | Gluten 2 | 224 | 224 | 224 | 224 | 224 | 224 | 224 |
| | Soybean protein | 480 | 400 | 360 | 320 | 240 | 160 | 80 |
| | Protein hydrolysate | | 80 | 120 | 160 | 240 | 320 | 400 |
| Results | Extensibility | - | 25 | 34 | 38 | 50 | 65 | 78 |
| | Tensile strength | - | 1253 | 1300 | 1322 | 1395 | 800 | 561 |
| | Noodle-making property | 1 | 4 | 5 | 5 | 5 | 4 | 3 |

As shown in Test Examples 5-1 to 5-7, when a part of the soybean protein was replaced with a protein hydrolysate, it was observed that the extensibility of the noodle belt tended to increase with an increase in the blending ratio of the protein hydrolysate. Regarding the stiffness of the noodle belt, the tensile strength was slightly increased with an increase in the blending ratio of the protein hydrolysate, and the noodle belt tended to stiffen. However, at a certain amount or more, inversely, the tensile strength decreased, and the noodle belt tended to soften. This result suggested that when noodle making is impossible due to a lack of extensibility, extensibility can be improved without significantly changing the stiffness of the noodle belt by blending a protein degradation product together as protein other than gluten.

Combining the results of Tests 1 to 5, it was suggested that when a gluten composition and a protein ingredient other than gluten are used in combination and the extensibility measured by an extensograph is 21 mm or more, noodle making is possible, and the extensibility is preferably 25 mm or more and most preferably 34 mm or more and 65 mm or less. In addition, it was suggested that the tensile strength indicating the stiffness of a noodle belt is preferably 800 BU or more and more preferably 800 BU or more and 1600 BU or less.

## Claims

1. A noodle belt comprising a gluten composition and a protein ingredient other than gluten as a main raw material powder,
wherein
a total content of the gluten composition and the protein ingredient other than gluten included in the main raw material powder is 20% or more, and
wherein
an extensibility measured by an extensograph is 21 mm or more.

2. The noodle belt according to claim 1, wherein a tensile strength measured by the extensograph is 800 BU or more.

3. The noodle belt according to claim 1 or 2, wherein a weight ratio of the gluten composition to the protein ingredient other than gluten is 3:7 to 8:2.

4. The noodle belt according to claim 1 or 2, wherein the gluten composition comprises:
a gluten powder of which a mixing resistance measured by a farinograph reaches the maximum after the start of mixing and then decreases over time; and
a gluten powder of which the mixing resistance reaches the maximum and then does not decrease over time, and
an amount of the gluten powder of which the mixing resistance measured by the farinograph reaches the maximum after the start of mixing and then decreases over time is 70 wt% or less of the gluten composition.

5. The noodle belt according to claim 1 or 2, wherein the protein ingredient other than gluten is at least one of soybean protein, rice protein, or pea protein.

6. The noodle belt according to claim 1 or 2, wherein a protein degradation product is included as the protein ingredient other than gluten.

7. A noodle string produced using the noodle belt according to any one of claims 1 to 6.

8. A method for producing a noodle, comprising steps of:
producing a noodle dough from a main raw material powder that includes a gluten composition and a protein ingredient other than gluten, wherein a total content of the gluten composition and the protein ingredient other than gluten is 20% or more,
producing a noodle belt having an extensibility measured by an extensograph of 21 mm or more from the noodle dough, and
producing a noodle string from the noodle belt.
